# EUROPEAN PATENT APPLICATION

(11) **EP 1 908 708 A1**
(43) Date of publication of application: **09.04.2008**
(21) Application number: 07104457.2
(22) Date of filing: 19.03.2004
(51) Int. Cl.: B65G 47/76

(54) **Diverter**

(30) Priority: 21.03.2003 US 456777 P; 11.06.2003 US 477720 P; 10.03.2004 US 796917
(62) Divisional of application: 04757930.5
(71) Applicant: Dematic Corp., Grand Rapids, MI 49505 (US)
(72) Inventor: Wolf, Stephen C., Grand Rapids, MI 49546 (US)
(74) Representative: Moser & Götze

(57) **Abstract**

A diverter system comprising:
- a conveying surface (12a) having a conveying direction (A) and for conveying an article at a conveying speed;
- a pair of diverter assemblies (14, 16) at opposite sides of said conveying surface, each of said diverter assemblies comprising an arm (26, 126, 226, 226', 626) mounted for pivotal movement between a non-diverting position and a diverting position wherein said arm is pivoted across at least a portion of said conveying surface; and
- a drive system (110) for independently and selectively moving said arms between said diverting positions and said non-diverting positions wherein said arms may be sequentially or each arm may be individually moved to their respective diverting positions and wherein an article conveyed on said conveying surface is diverted in a diverting direction when the article contacts one of said arms when said one arm is in said diverting position.

## Description

### Technical field and background of the invention

The present invention relates to a diverter and, more particularly, to a paddle diverter for use in diverting objects, such as in a material handling system.

### Summary

The present invention provides a paddle diverter assembly used in pairs on opposed sides of a conveying surface. The diverter assemblies are driven by a control system that is configured to individually move the paddle diverter assembly arms so that they can be sequentially moved or a single arm can be moved to increase the through-put of the conveyor system.

In one form of the invention, a paddle diverter assembly includes an arm and a drive system for moving the arm between a non-diverting position and a diverting position.

In other aspects, the arm includes a driven diverting surface, such as a drive belt.

In other aspects the drive system comprises a driver, such as a motor, and a servo controller that selectively powers the driver to selectively move the arm of the diverter assembly.

According to another form of the invention, a diverter system includes a conveying surface, a pair of diverter assemblies at opposite sides of the conveying surface, and a drive system. Each of the diverter assemblies comprises an arm mounted for pivotal movement between a non-diverting position, wherein the arm is adjacent the conveying surface, and a diverting position, wherein the arm is pivoted across at least a portion of the conveying surface. The drive system independently and selectively moves the arms between their diverting and non-diverting positions wherein the arms may be sequentially or each arm may be individually moved so that an article conveyed on the conveying surface is diverted in a diverting direction when the article contacts one of the arms when the one arm is in its diverting position.

In other aspects, the drive system comprises a motor for each arm, with the motors independently actuated to independently pivot the arms. For example, the drive system may comprise a controller, which selectively actuates the motors of the respective arms. A suitable controller may comprise a servo controller.

In other aspects, each of the arms includes a driven diverting surface, such as a drive belt. The drive belts are driven by driven rollers, which in turn are driven by the drive system. Furthermore, each driven roller includes a driven axis about which the driven roller is driven. The arms pivot about respective pivot axes when pivoting between their non-diverting and diverting positions, with the driven axis of a driven roller of a respective arm being preferably generally co-linear with the pivot axis of the respective arm.

According to yet other aspects, the drive system is adapted to decouple movement of the drive belts about their driven axes from the movement of the arms about their pivot axes. For example, the drive system may include separate drivers for pivoting the arms and for driving the drive belts, which are independently actuated by the drive system.

The present invention also provides a conveyor system with diverter assemblies that are controlled in a manner that enables the spacing between objects on the conveying surface of the conveyor system to be reduced to thereby increase the through-put of the conveyor system. These and other objects and advantages will be appreciated from the drawings and description that follow.

### Detailed description of the drawings

FIG. 1 is a plan view of a diverting system of the present invention, which includes a conveyor section and a pair of paddle diverter assemblies;
   FIG. 1A illustrates a roller conveyor adjacent the diverter system of FIG. 1;
   FIG. 1 B illustrates a gravity chute adjacent the diverter system of FIG. 1;
FIG. 2 is a fragmentary side elevation view of the right side paddle diverter assembly of FIG. 1;
   FIG. 2A is a partial enlarged view of the paddle diverter assembly of FIG. 2 illustrating the drive mechanisms of the paddle diverter assembly of the present invention;
   FIG. 2B is a partial elevation view of the diverter assembly with the driven belt partially removed for clarity;
   FIG. 2C is a perspective view of the arm of the diverter assembly of the present invention;
   FIG. 2D is a partial exploded perspective view of the impact plate or spring of the arm of FIG. 2C;
   FIG. 2E is an enlarged cross-section view taken along line IIE-IIE of FIG. 2C;
   FIG. 2F is a schematic elevation of the arm and motor illustrating position switches;
   FIG. 2G is a schematic drawing illustrating the control system of the present invention;
   FIG. 2H is a schematic view of a control unit for each diverter assembly;
FIG. 3 is a cross-section view illustrating another embodiment of the diverter assembly of the present invention;
FIG. 4 is a side elevation view of the diverter assembly of FIG. 3;
FIG. 5 is a plan view of the diverter assembly of FIG. 4;

### Detailed description of the preferred embodiments

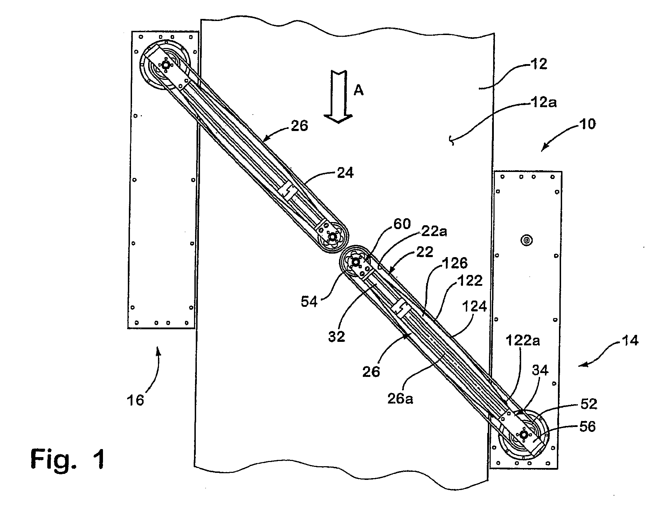

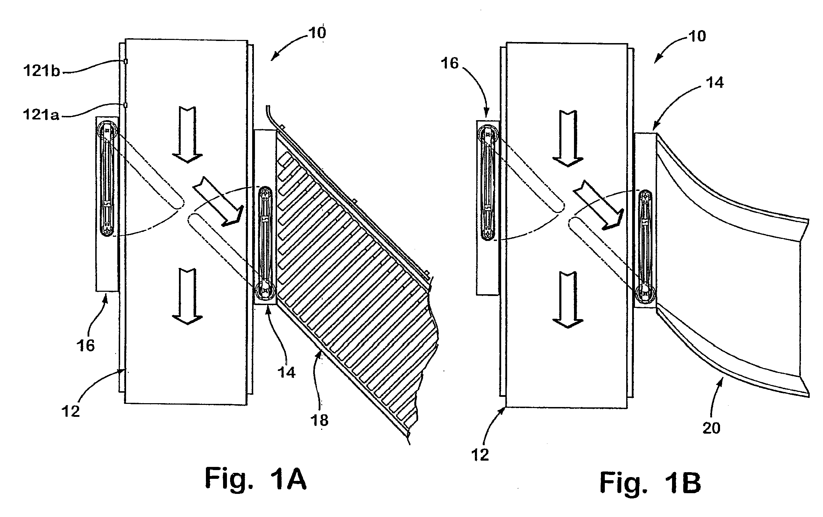

Referring to FIG. 1, the numeral 10 designates a diverter system of the present invention. Diverter system 10 includes a conveying surface 12 and a pair of paddle diverter assemblies 14 and 16, which may be selectively actuated to divert objects conveyed on conveying surface 12a of conveyor 12 in a diverting direction, which is non-parallel with the conveying direction indicated by the arrow A in FIG. 1. In the illustrated embodiment paddle diverter assembly 16 acts as a lead diverter assembly, while paddle diverter assembly 14 acts as a lag diverter assembly. Referring to FIG. 1A, diverter assemblies 14 and 16 may be used to divert articles onto a conveyor 18, such as a roller conveyor, which may be positioned adjacent diverter assembly 14. Alternately, diverter assemblies 14 and 16 may divert articles or objects to a discharge chute 20, such as shown in FIG. 1 B, or the like.

Referring again to FIG. 1, paddle diverter assemblies 14 and 16 are preferably substantially identical units, which can be positioned on either side of the conveyor. For ease of reference, the description of paddle diverter assemblies 14 and 16 will be made in reference to paddle diverter assembly 14.

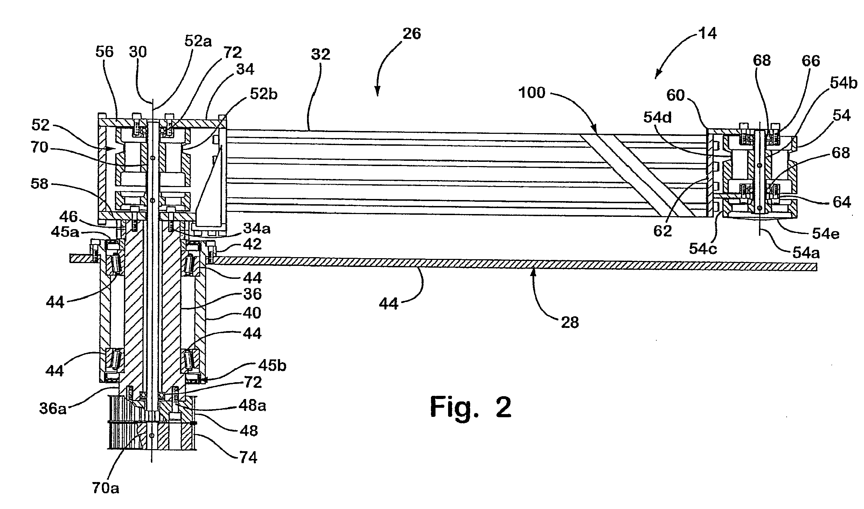

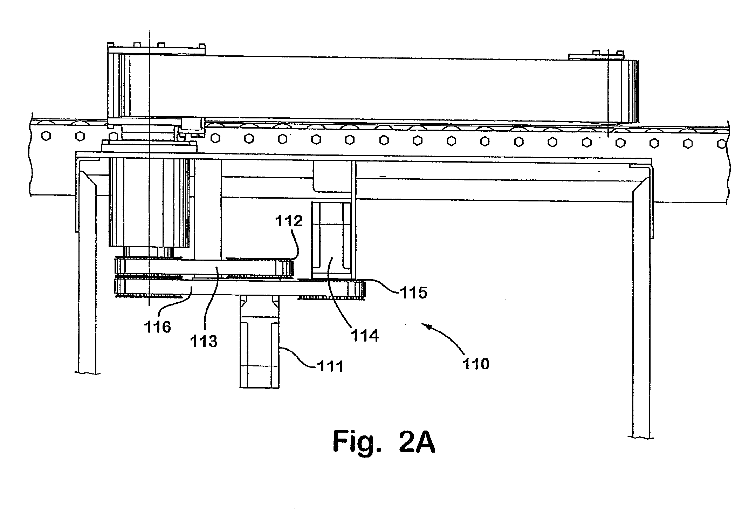

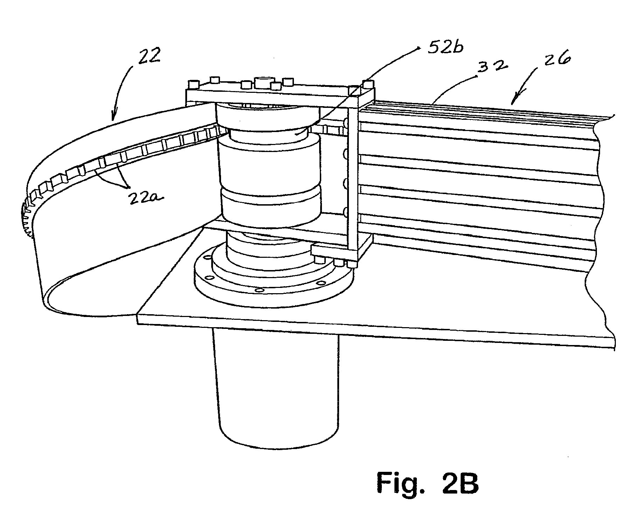

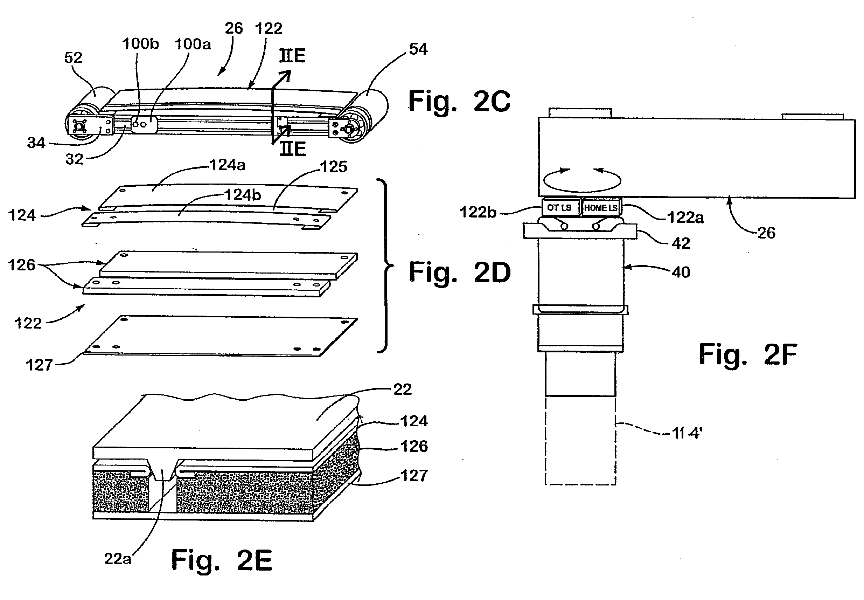

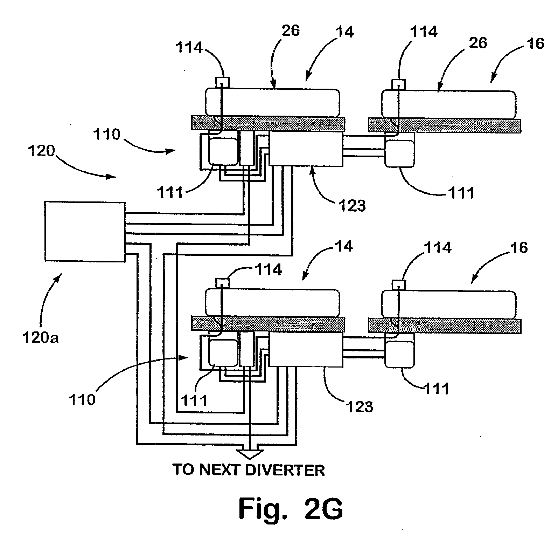

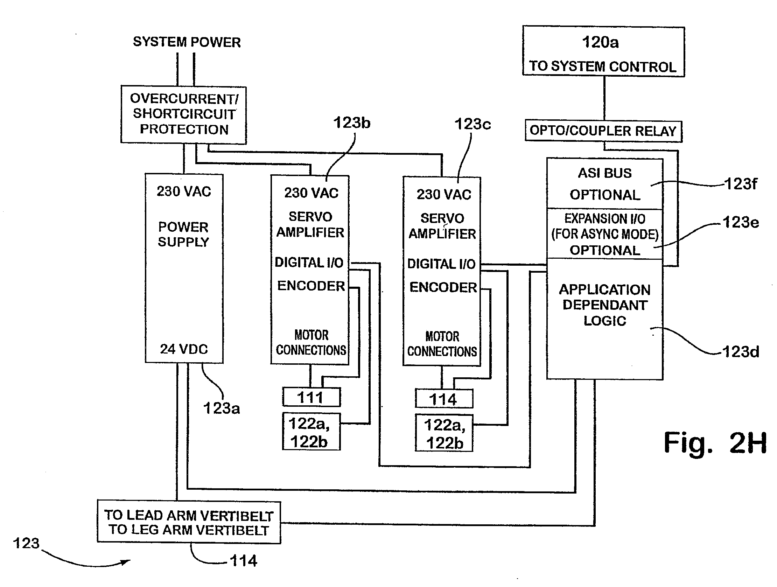

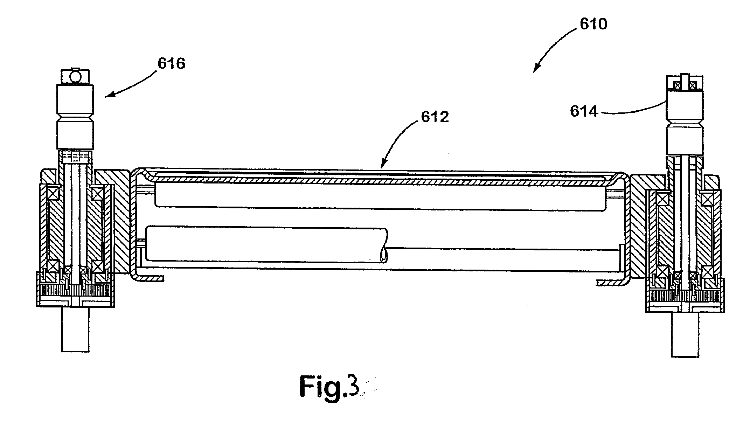

Referring to FIG. 2, paddle diverter assembly 14 includes an arm 26 that is pivotally mounted (about a pivot axis 30) to a frame 28, which is positioned adjacent conveyor 12. Further details of frame 28 will be made in reference to FIGS. 3-5 described below. Arm 26 includes an elongated member, preferably an aluminum extruded member 32, and an arm mount 34, which is mounted to a hollow pivot cylindrical 36 that extends through frame 28. In this manner, arm 26 is relatively light and rigid, though it should be understood that arm 26 may be formed from a solid member and/or composite member assembled from several parts. Cylinder 36 is driven about its drive axis 36a by a drive system 110 described in greater detail in reference to FIG. 2A. Arm mount 34 is rigidly coupled to pivot cylinder 36, for example, by fasteners 34a, so that when cylinder 36 is driven about drive axis 36a, arm 26 and pivot cylinder 36 will pivot about pivot axis 30 and drive axis 36a in unison.

Pivot cylinder 36 is journaled in frame 28 by a cylindrical hub 40 that is mounted to frame 28. Frame 28 includes an upper flange or plate member 44 with an opening 44a through which pivot cylinder 36 extends. Cylindrical hub 40 includes an upper flange 42 that rests on the upper surface of and is secured to plate member 44 of frame 28 by, for example, fasteners. Cylindrical hub 40 supports a plurality of bearings, such as roller bearings 44, which journal pivot cylinder 36 and provide lateral support to pivot cylinder 36 in hub 40. Pivot cylinder 36 is vertically supported in hub 40 by an annular lock nut 46 that is mounted to cylinder 36 and bears on spacers 45a provided at the upper end of hub 40. Furthermore, the lower end of cylindrical pivot cylinder 36 includes an enlarged shoulder 36a which bears against spacers 45b provided in the lower end of hub 40 to limit upward movement of pivot cylinder 36 in hub 40. Mounted to the lower most end of pivot cylinder 36 is a gear sprocket or pulley 48, for example, by fasteners 48a, which is driven by a driver, such as a motor, which will be more fully described below in reference to drive system 110. In this manner, when sprocket 48 is driven to rotate pivot cylinder 36 about its drive axis 36a, arm 26 will rotate about pivot axis 30 to move between its diverting and non-diverting positions.

As noted above, in the illustrated embodiment, paddle diverter assembly 14 includes a driven diverting surface, preferably a drive belt 22. Referring again to FIGS. 1 and 2, arm 26 includes a drive pulley 52 and a slave pulley 54 for driving and supporting belt 22. As best seen in FIG. 2B, belt 22 includes one or more guide ribs 22a that project inwardly and, further, extend into corresponding grooves 52b and 54d formed or provided in pulleys 52 and 54, respectively. In this manner, pulleys 52 and 54 provide vertical guides and support to belt 22. Drive pulley 52 is mounted between the upper and lower members 56 and 58 of arm mount 34 and, further, is positioned such that its drive axis 52a is substantially collinear with pivot axis 30 of arm 26. Pulley 54 is mounted at the distal end of arm 26 by a bracket 60. Bracket 60 comprises a generally C-shaped bracket with a web or base member 62 and a pair of outwardly extending ears or flanges 64 and 66. Base member 62 mounts to the distal end of extruded member 32, for example, by fasteners that extend into member 32.

Pulley 54 is mounted between flanges 64 and 66 by a shaft 54b, which is journaled in flanges 64 and 66 on bearings 68, which permit pulley 54 to rotate about its respective rotational axis 54a. Similarly, pulley 52 is mounted in arm mount 34 on a shaft 70, which is journaled in upper member 56 of arm mount 34 and lower end 36a of pivot shaft 36 by bearings 72. The lower most end 70a of drive shaft 70 is coupled to a drive pulley or sprocket 74, which in turn is coupled to a driver, such as a motor, as will be more fully described below in reference to drive system 110. In this manner, when drive sprocket 74 is driven about axis 30, drive pulley 52 will drive belt 22 about pulley 54 and, in turn, around arm 26.

Optionally, paddle diverter assembly 14 includes a pulley hub 54e that is mounted to lower segment 54c of pulley 54e. Hub 54c preferably comprises a low friction material, such as plastic, and provides a support for arm 26 at its cantilevered end in the event the arm 26 is loaded vertically downward, for example, by someone stepping on the arm. As a result, hub 54e protects the bearings and other components of paddle diverter assemblies 14, 16 in the even that the cantilevered end of arm 26 is loaded sufficiently to cause it to deflect.

As best understood from FIG. 2, extruded member 32 comprises a single extrusion, which includes a plurality of transverse passageways 32a, 32b, and grooves 32c extending through member 32. However, it can be appreciated that other types of extrusions may be used.

Referring again to FIG. 2A and the first embodiment of diverter assembly 10, pulleys 48 and 74 are driven by a drive system 110. In the illustrated embodiment, drive system 110 includes a first or arm driver, such as motor 111, for driving pivot cylinder 36 and a second or belt driver, such as drive motor 114, for driving shaft 70. Motors 111 and 114 are mounted adjacent conveyor 12 below frame 28 and preferably comprise adjustable speed and reversible motors. Furthermore, suitable motors include servomotors, such as Series HC-KFS from Mitsubishi or are available from Dunkermotoren from Germany. As will be more fully described in reference to a later embodiment in FIG. 2G, a belt drive motor (114') may be mounted directly to the drive shaft 70a below hub 40. It should be understood that other drivers may be used to move the arms, such as cylinders, including pneumatic and/or hydraulic cylinders, and/ or rotary actuators, including pneumatic or hydraulic rotary actuators, such as pneumatic motors, including servo-controlled pneumatic motors, or linear actuators, such as rack and pinion mechanisms. For example, a rack may be used to rotate a curved rack or gear, which would then provide the rotational motion to the arm. Therefore, it should be understood that the term "driver" is used in its broadest sense and is not limited to a motor. However for ease of description of the preferred embodiments, reference hereinafter will be made to motor or motors.

Motor 111 includes a drive sprocket 112 about which a drive pulley 113 extends to engage drive sprocket 48 mounted on pivot cylinder 36. Second motor 114 similarly includes a drive sprocket 115. A drive belt 116 extends around sprocket 115 for driving drive sprocket 74, which is mounted to shaft 70. Preferably, the arm drive motor 111 includes a switch and potentiometers built into the motor and, further, are coupled to a fault indictor circuit. Furthermore, control system 120 selectively and independently actuates motors 111 and 114. As it would be understood, therefore, the driven belts may be independently driven from arms 26 and, further, paddle diverters 14 and 16 may be independently pivoted between their respective diverting and non-diverting positions.

Optionally, control system 120 includes sensors to detect location and size of the object or articles conveyed on the conveying surface 12a of conveyor 12. For example, control system 120 may include a pair of spaced apart sensors 121 a and 121b (FIG. 1A), such as photo eyes. Sensors 121a and 121b detect the leading edge of the article to be diverted and the tailing edge of the article so that the control system may determine the length of the article being diverted and, therefore, may determine the timing needed for the pivoting of the respective paddle diverters assemblies to minimize the time that the respective arms are pivoted across the conveying surface. In this manner, articles may be more closely placed on the conveyor and/or the conveying speed of the conveyor may be increased. As would be understood, therefore, control system 120 may operate paddle diverter assemblies asynchronously to, thereby, increase the throughput of the conveyor system.

Preferably, control system 120 uses servo control to control the position of the arms. In addition, control system 120 preferably includes a servo controller for each arm drive motor (111), which use feedback control loops to determine the position of the respective diverter assembly arms. This enables control system 120 to control the degree of rotation of the respective diverter assembly arms and, further, the direction of the rotation of the diverter assembly arms. For example, control system 120 includes a separate servo amp and overtravel switches 122a and 122b for each arm. Suitable servo amplifiers include Series MR-J2S from Mitsubishi. In addition, this enables control system 120 to control the drivers to sequentially move the diverter arms or to individually move the diverter arms. For example, in some applications, only one arm is moved.

Referring to FIG. 2F, switches 122a and 122b are preferably mounted to arm 26 and actuated when triggered, for example, when aligned with metal ramps or "dogs" or the like, which are mounted to hub 40 at locations that correspond to the home position for the arm and the overtravel position for the arm. Since the arms are moved between their respective home or non-diverting positions and their diverting positions without the use of mechanical stops, the orientation of the diverter assembly is unlimited by the physical configuration of the system and, instead is controlled by control system 120. Moreover, the noise generated by diverter assemblies 14, 16 is significantly reduced over the prior art.

Referring to FIG. 2G, each pair of paddle diverter assemblies includes a control unit 123, which includes the respective servo amps for each paddle diverter assembly. Where multiple pairs or sets of diverter assemblies are used, each control unit 123 may be connected, for example, by a "daisy chain" to a central controller 120a through wiring and Ethernet lines, which significantly reduces the field wiring.

Referring to FIG. 2H, each control unit 123 includes a power supply 123a and a servo amp 123b and 123c for each diverter assembly 10. In addition, control unit 123 includes application dependent logic 123d, which is in communication with the servo amps and, further, with the arm drive motors (111) of the respective arms (26). Servo amps 123b and 123c also communicate with the respective arm drive motors (motors 111) and, further, to the overtravel and home switches of the respective arms (122a, 122b). As noted above, arms 26 may be driven asynchronously or may be driven synchronously. For example, for asynchronous operation, application dependent logic 123d handles the timing of the respective arms (the lead arm and the lag arm). For example, application dependent logic 123d receives input from sensors 121 a and 121 b from which the application dependent logic determines the length of the object being diverted to determine a time constant. The time constant varies with each size of article being diverted and is used to determine the lag time between driving the lead arm and the lag arm.

Optionally, control unit 123 may include a module 123e that can provide additional access ports to application dependent logic 123d to vary the application dependent control. For example, in an asynchronous mode, the application dependent logic 123d may be separately and independently in communication with the arm drive motors of the leading lag arms. In a synchronous mode, for example, a single connection may be used to control both arms.

In addition, control unit 123 may incorporate an actuator sensor interface 123f (ASI Bus). Actuator sensor interface 123f may provide additional information about the respective components of each paddle diverter assembly. Furthermore, control unit 123 preferably includes an opto coupler/relay 123g, which isolates the main processor from potential electrical damage from control unit 123. Opto coupler relay 123g interfaces with application dependent logic 123d and detects when an alarm or fault mode occurs to trigger a supervisory controller in the main control system (120a). Opto coupler relay 123g provides a hardware indicator to the main control system of whether the diverter assembly, namely, the arm drive motor is healthy or not so that the main control system can cut the power to the drive arm motor and also the belt drive motor.

Furthermore, given that the arm drive motors are servo controlled, when the respective arms of the diverter assemblies impact an article, the control system will permit the diverter to move away from the diverting position to absorb some of the impact of the article to therefore reduce the impact on the article being diverted. In other words, the control system provides an electrical or electronic spring for the diverter assemblies so that the output shaft of the arm drive motor of an arm may be temporarily rotated in an opposite direction from its driving direction against the force of the magnetic coil in the motor, which then is overcome by the electromagnetic field in the coil to return the arm to its diverting position.

In addition, each of the respective arms of the diverter assemblies may include an impact plate or spring 122 mounted to the arm to also absorb some of the impact from the article. Referring again to FIG. 1 and to FIGS. 2C-2E, spring 122 comprises a plate member 124, such as a spring steel plate, which extends along the longitudinal axis 26a of arm 26. Preferably positioned behind plate member 124 is a cushioning material 126, such as foam or the like, which further improves the impact absorbing ability of spring 122. Cushioning material 126 may be mounted to member 32 by a mounting plate 127, such as a plastic mounting plate, with the cushioning member 126 secured to the mounting plate by, for example, adhesive. Spring 122 is mounted on one end to extruded member 32 by a plurality of fasteners 122', which extend into and engage the respective grooves, for example grooves 32c of extruded member 32. The distal end of spring 122 is bent inwardly toward extruded member 32 and cantilevered so that when plate member 124 is compressed, the distal end of plate member 124 is free to extend along the longitudinal axis 26a of arm 26. Furthermore, plate member 124 includes a longitudinal groove 125, which receives the rib or ribs 22a of the belt 22 to provide a guide and additional vertical support to the belt 22. Optionally plate member 124 may comprise two or more plate sections 124a and 124b to thereby form the groove 125 there between. In addition to forming an impact-absorbing member, spring 122 can also be used to pre-tension belt 122.

As would be understood from the foregoing description, paddle diverter assemblies 14 and 16 may be used to divert articles from either side of the conveyor. In addition, paddle diverters 14 and 16 may be positioned between adjacent conveyor sections such that their respective arms can extend across the conveying surface of either adjacent conveyor. For example, the control system for one of the paddle diverter assemblies may be programmed to permit the respective arm of paddle diverter assembly to pivot across the conveying surface of a central conveyor as well as the conveying surface of the adjacent conveyor section. Similarly, the control system for the other paddle diverter assembly may be programmed to move its respective arm over the central conveyor or over an adjacent conveyor on the other side of the central conveyor. In this manner, products conveyed on the central conveyor and flowing in the conveying direction may be diverted to the left or right by pivoting the respective arms of the paddle diverter assemblies in a counter-clockwise direction or by pivoting the arms of the paddle diverter assemblies in a clockwise direction.

It should also be understood that paddle diverter assemblies 14 or 16 may be used in conjunction with other diverting devices, such as pop-up rollers, in which case, the arm of the respective paddle diverter assembly extends substantially across the full width of the conveyor to divert the articles onto the rollers of the pop-up rollers so that the rollers can transfer the diverted article onto an adjacent conveyor section.

Referring to FIG. 3, the numeral 610 generally designates another embodiment of the diverter system of the present invention. Diverter system 610 includes conveyor 612 (similar to conveyor 12) and a pair of diverter assemblies 614 and 616, which are also similar paddle diverter assemblies 14 and 16. For ease of reference, the following description will be limited to paddle diverter 614, which for ease of assembly and for reduction in cost is of similar or substantially identical construction to paddle diverter 616.

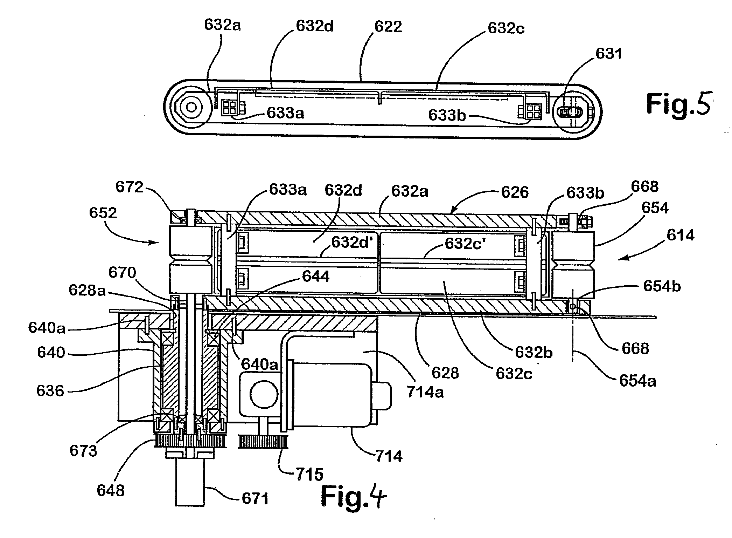

Referring to FIGS. 4 and 5, paddle diverter assembly 614 is of similar construction to paddle diverter 14 and includes an arm 626, which supports a pair of pulleys 652 and 654 for supporting a driven surface, such as a drive belt 622. Arm 626 is formed by upper and lower plate members 632a and 632b, which are interconnected by vertical supports 633a and 633b. Pulley 654 is mounted on a drive shaft 654b, which is journaled in upper and lower plate member 632a and 632b by bearings 668 to thereby rotatably mount pulley 654 about axis 654a. Pulley 652 is mounted on and coupled to a drive shaft 670, which is journaled in upper plate member 632a by bearing 672 on one end and is journaled in pivot cylinder 636 by bearings 673. Drive shaft 670 projects through pivot cylinder 636 to be driven by a motor 671, which is directly drivingly engaged with drive shaft 670.

In the illustrated embodiment, pivot cylinder 636 extends through an opening 628a provided in diverter assembly frame 628 and into a hub 640, which is mounted to frame 628 by a plurality of fasteners 640a. For details of diverter assembly frame 628, reference is made to frame 28. Hub 640 includes a plurality of roller bearings 644, which journal pivot cylinder 636 in hub 640. The distal end of pivot cylinder 636 projects through hub 640 and is coupled to a drive pulley 648, which is similarly coupled by a belt or the like to a drive pulley 715 of a second motor 714, which is controlled along with motor 671 by a control system similar to control system 120.

As best seen in FIG. 4, motor 714 is mounted to diverter assembly frame 628 by a bracket 714a. It should be understood, further, that motor 671 may be mounted on top of arm 626 to the upper end of shaft 670 to reduce the vertical extent of diverter the diverter assembly below frame 628, which may be more suitable in conveyor systems that have a lower bed height.

Referring to FIG. 5, belt 622 is of similar construction to belt 22 and comprises a closed loop belt with an inwardly extending rib or plurality of ribs to provide vertical guide surfaces for pulley 652 and 654. In addition, support arm 626 includes intermediate members 632c and 632d positioned between upper and lower plate members 632a and 632b. In the illustrated embodiment, members 632c and 632d comprise channel members that are mounted to vertical supports 633a and 633b of arm 626. In addition, each intermediate member 632c, 632d includes an elongate transverse groove 632c' and 632d', which provides additional support to belt 622 at least on the impact side of the respective arm. It should be understood, however, that intermediate member 632c and 632d may be provided on either side of vertical support 633a and 633b so that the diverter arm may provide the diverting surface on both sides of arms 626. Adjustment of the belts tension is achieved by mounting shaft 654b in a slotted opening 631 (FIG. 5) provided in upper plate member 632a.

As would be understood from the foregoing description, the paddle diverter assemblies of the present invention may be used in a variety of different configurations. The diverter assemblies may be used in groups and positioned in along one or more sides of a conveyor to provide a selectively controlled merge of products from incoming conveyors to a central main conveyor. The diverter assemblies may be used to block the flow of articles from an input conveyor or input conveyors or may be pivoted to open the flow of the articles from an incoming conveyor or incoming conveyors so that the articles can be merged with the articles conveyed on single conveyor. The diverting assemblies may be used in groups to provide multi-lane merges. For example, the diverting assemblies may be used as right angle transfer mechanisms. The asynchronous control of paddle diverter assemblies permits the an upstream diverter assembly to move back to its home or non-diverting position before the article is transferred over to the adjacent conveyor or the like so that articles can be conveyed more closely on the conveyor.

The paddle diverter assemblies are particularly suitable for diverting objects with irregular or difficult configurations, such as tires. Furthermore, in this and other similar applications the drive belt may be eliminated.

While several forms of the invention have been shown and described, other forms will now be apparent to those skilled in the art. For example, although illustrated as a symmetrical assembly, arms 26 of diverter assemblies 14 and 16 may have different lengths with their ends generally meeting at a location offset from the center of the conveying surface. Furthermore, the various aspects of the diverter assemblies may be combined with other features not specifically illustrated herein and, further, the diverter assemblies of the present invention may be used in combination with non-belt conveyors.

Additionally, the arm of the respective diverter assembly may be used in a horizontal application, such as in a pop-up diverter.

As previously noted, other types of drivers may be used to move the arms, such as cylinders, including pneumatic and/or hydraulic cylinders, and/ or rotary actuators, including pneumatic or hydraulic rotary actuators, such as pneumatic motors, including a servo-controlled pneumatic motors, or linear actuators, such as rack and pinion mechanism. For example, a linear rack may be used to rotate a curved rack or gear, which would then provide the rotational motion to the arm. Therefore, it should be understood that the term "driver" is used in its broadest sense and is not limited to a motor.

Therefore, it will be understood that the embodiments shown in the drawings and described above are merely for illustrative purposes, and are not intended to limit the scope of the invention, which is defined by the claims, which follow as interpreted under the principles of patent law including the doctrine of equivalents.

## Claims

1. A diverter system comprising:
- a conveying surface (12a) having a conveying direction (A) and for conveying an article at a conveying speed;
- a pair of diverter assemblies (14, 16) at opposite sides of said conveying surface, each of said diverter assemblies comprising an arm (26, 126, 226, 226', 626) mounted for pivotal movement between a non-diverting position and a diverting position wherein said arm is pivoted across at least a portion of said conveying surface; and
- a drive system (110) for independently and selectively moving said arms between said diverting positions and said non-diverting positions wherein said arms may be sequentially or each arm may be individually moved to their respective diverting positions and wherein an article conveyed on said conveying surface is diverted in a diverting direction when the article contacts one of said arms when said one arm is in said diverting position.

2. The diverter system in Claim 1, wherein said drive system comprises a driver (111) for each arm, said drivers being independently actuated to move said arms to their respective diverting positions.

3. The diverter system in Claim 2, wherein said drive system comprises a controller (120), said controller selectively and independently actuating said drivers.

4. The diverter system according to Claim 1, wherein each of said arms includes a horizontal extent and a drive belt (22, 622) extending around said horizontal extent, said belts being driven around their respective horizontal extents and providing driven diverting surfaces for each of said arms.

5. The diverter system according to Claim 4, wherein each of said drive belts is driven by a driven roller (52), said driven rollers driven by said drive system.

6. The diverter system according to Claim 5, wherein said drive system is adapted to de-couple movement of said drive belts about their respective driven axes from movement of said arm about said pivot axes.

7. The diverter system according to Claim 6, wherein said drive system includes a motor (111) for pivoting said arm and a motor (114) for driving said drive belt, said motors independently actuated by said drive system.
